# EUROPÄISCHE PATENTSCHRIFT

(11) **EP 2 954 968 B1**
(45) Veröffentlichungstag und Bekanntmachung des Hinweises auf die Patenterteilung: **20.01.2021**
(21) Anmeldenummer: 14172332.0
(22) Anmeldetag: 13.06.2014
(51) Int. Cl.: B23G 5/18

(54) **Gewindefräser**
Thread milling cutter
Fraise de filetage

(43) Veröffentlichungstag der Anmeldung: 16.12.2015
(73) Patentinhaber: WALTER AG, 72072 Tübingen (DE)
(72) Erfinder: Kuderer, Daniel, DE-77736 Zell a.H. (DE)
(74) Vertreter: Sandvik

(56) Entgegenhaltungen:
- EP-A1- 1 727 638
- EP-A1- 2 213 399
- WO-A2-2010/101512
- DE-A1- 19 958 636
- DE-U1-202013 105 739
- GB-A- 2 177 635
- JP-A- H07 266 121
- US-A- 1 465 240
- US-A- 5 733 078

## Beschreibung

Die vorliegende Erfindung betrifft einen Gewindefräser gemäß dem Oberbegriff des Anspruchs 1, d.h. einen Gewindefräser mit einem Grundkörper, der aus einem Schaft und einem in der Grundform zylindrischen Schneidenteil besteht, und mit einer Rotationsachse und mehreren in Umfangsrichtung beabstandeten Schneidzähnen, die in mindestens zwei verschiedenen, (d. h. axial beabstandeten) und sich senkrecht zur Rotationsachse erstreckenden Radialebenen an dem Schneidenteil angeordnet sind.

Der Begriff "Schaft" ist in diesem Fall rein funktionell zu verstehen, und umfasst insoweit alle Arten von Gewindefräsern, die ein Schneidenteil und ein ein- oder mehrstückig mit dem Schneidenteil verbundenes (hier als "Schaft" bezeichnetes) Halteteil aufweisen, das sich im Betrieb gemeinsam mit dem Schneidenteil dreht.

Ein entsprechender Gewindefräser ist beispielsweise aus der WO2010/101512 A2 bekannt. Bei dem aus dem US-Patent 5,733,078 bekannten Gewindefräser sind in einer Ausführungsform zwei an einem zylindrischen Teil diametral gegenüberliegende Schneidplatten vorgesehen, die jeweils zwei Schneidzähne aufweisen, welche jeweils das Profil eines Gewindeganges haben. Die Schneidzähne der beiden Schneidplatten sind paarweise in zwei axial voneinander beabstandeten Radialebenen angeordnet.

Entsprechende Gewindefräser sind vorgesehen für die Herstellung von Innengewinden mit einem Nennradius, der größer ist als der Flugkreisradius der Schneidzähne bezüglich der Rotationsachse des Gewindefräsers. Dies bedeutet, dass zur Herstellung eines entsprechenden Innengewindes der Fräser mit seiner sich parallel zur Achse der Bohrung erstreckenden Rotationsachse spiralförmig um die Achse der Bohrung herum- und axial in diese hinein und/oder herausbewegt werden muss, in welcher das Gewinde hergestellt werden soll.

Im Allgemeinen ist der Innenradius des Gewindes bzw. der Radius der Bohrung, in welcher das Gewinde hergestellt werden soll, deutlich größer als der Radius des Flugkreises der Schneidzähne, so dass der Fräser im Zentrum der Bohrung axial in diese hinein- oder herausbewegt werden kann, ohne das die Schneidzähne die Wand der Bohrung berühren.

Der Fräser kann somit zunächst ein Stück weit in die Bohrung eingetaucht werden, ohne dass die Schneidzähne die Wände der Bohrung berühren und anschließend wird der Fräser in Rotation
versetzt und radial nach außen bewegt und gleichzeitig unter axialem Vorschub entlang einer Spiralbahn um die Achse der Bohrung herum bewegt, sodass die Schneidzähne mit der Wand der Bohrung in Eingriff treten und aufgrund der Bewegung des gesamten Fräsers auf einer entsprechenden Schraubenlinie das Gewinde in die Wand der Bohrung fräsen.

Je nach Vorschub und Abstand der Radialebenen mit Schneidzähnen können Gewinde mit unterschiedlichen Steigungen hergestellt werden und bei Bohrungen, deren Durchmesser größer ist als der Durchmesser des Flugkreises der Schneidzähne können auch mehrere Abschnitte eines Gewindes jeweils durch verschiedene, axial versetzt angeordnete Schneidzähne hergestellt werden.

Entsprechende Fräser gibt es, wie auch der Stand der Technik gemäß der oben erwähnten US 5,733,078 zeigt, sowohl als einstückige Werkzeuge, deren Schneidzähne unmittelbar aus dem Material des Schneidenteils gebildet sind, und ebenso auch als Werkzeuge mit Schneidplatten, die auswechselbar sind und speziell mit entsprechenden Schneidzähnen ausgestattet sind, die einem Gewindeprofil entsprechen.

Einstückige Gewindefräser haben den Nachteil, dass sie nach einem Verschleiß der Schneidzähne nur begrenzt wieder aufgearbeitet werden können, wobei das Schneidenteil auch aus einem entsprechend verschleißfesten Material, in der Regel einem Hartmetall bzw. Sintercarbid, hergestellt werden müssen, gegebenenfalls zu beschichten sind und damit sowohl in der Beschaffung als auch in der Wiederaufarbeitung sehr teuer sind. Die Gewindefräser mit Schneidplatten haben wiederum den Nachteil, dass entlang des Umfangs eines in der Grundform zylindrischen Schneidenteils nur relativ wenig Platz zur Bereitstellung entsprechender Plattensitze zur Verfügung steht, wenn man eine ausreichende Stabilität des Schneidenteils gewährleisten will, sodass die Anzahl entsprechender Schneidplatten relativ begrenzt ist und damit der Gewindefräser weniger effektiv arbeitet als ein mit einer Vielzahl von Schneidnocken und Schneidzähnen ausgestatteter einstückiger Gewindefräser.

Ein weiterer Nachteil der Gewindefräser mit austauschbaren Wendeschneidplatten liegt darin, dass die entsprechenden Wendeschneidplatten häufig teure Spezialanfertigungen sind.

Andererseits besteht der Vorteil der Gewindefräser mit auswechselbaren Schneidplatten gerade in der Auswechselbarkeit verschlissener Schneidplatten, die auch in ihrer Summe wesentlich kostengünstiger sind als ein einstückiges Werkzeug und die es außerdem ermöglichen, den Grundkörper, d.h. den Schaft und das Schneidenteil des Gewindefräsers, aus einem weniger teuren und leichter zu bearbeitenden Material wie zum Beispiel Werkzeugstahl herzustellen.

Weiterhin sind im Stand der Technik bereits Gewindefräser wie der aus der US 1,465,240 bekannt geworden, die einen Schaft mit einem Schneidenteil aufweisen, wobei das Schneidenteil aus einem Aufnahmezapfen und mehreren Schneidringen und dazwischen angeordneten Abstandsringen bestehen, wobei jeder Schneidring eine Mehrzahl von Schneidzähnen in derselben Ebene aufweist.

Ein solcher Fräser hat allerdings den Nachteil, dass der die Stabilität praktisch allein gewährleistende zentrale Zapfen des Schneidenteils einen im Vergleich zum Gesamtdurchmesser des Fräsers geringen Durchmesser und damit eine vergleichsweise geringe Stabilität aufweist, weil entsprechende Schneidringe ebenso wie die Abstandsringe unvermeidlich erhebliche radiale Abmessungen haben, den eine Großteil des Durchmessers des Schneidenteils beanspruchen. Derartige Gewindefräser sind daher auf sehr große Gewindedurchmesser beschränkt. Sie sind außerdem in der Herstellung außerordentlich aufwändig und auch die präzise radiale und axiale Positionierung der Schneidecken erfordert einen erheblichen Aufwand in der Fertigung eines entsprechenden mehrteiligen Schneidenteils.

Gegenüber diesem Stand der Technik liegt der vorliegenden Erfindung die Aufgabe zu Grunde, einen Gewindefräser mit den eingangs genannten Merkmalen zu schaffen, der die Vorteile der hohen Arbeitseffizienz von einstückigen Gewindefräsern mit einer Vielzahl von Schneidzähnen und Schneidnocken mit den Vorteilen von Gewindefräsern mit Wendeschneidplatten verbindet, ohne auf große Durchmesser beschränkt zu sein.

Diese Aufgabe wird durch die Merkmale des Anspruchs 1

Die Schneidecken zahlreicher Standardschneidplatten, insbesondere von in der Draufsicht dreieckigen Schneidplatten, entsprechen bereits dem Profil vieler Standardgewinde mit Gewindeflanken, die im Wesentlichen unter 60° zueinander geneigt sind, wobei die Spitzen der Eckbereiche solcher Schneidplatten in aller Regel auch gerundet oder abgeschrägt sind, was wiederum der Form eines üblichen Gewindegrundes entspricht. Als Standard-Schneidplatten werden insbesondere Schneidplatten angesehen, die in Katalogen der Hersteller als Lagerware angeboten werden, eine Ober- und eine Unterseite mit einer diese Ober- und Unterseite verbindenden, umlaufenden Randfläche haben. Die Oberseite (bei doppelseitigen Platten auch die Unterseite) bildet dabei eine Spanfläche und kann gegebenenfalls auch strukturiert sein. Abgesehen von entsprechenden Strukturierungen zur Spanformung oder zur Abgrenzung von spanbeaufschlagten Flächen gegenüber Stützflächen sind Ober- und Unterseite von Standard-Schneidplatten im Wesentlichen parallel. (Siehe beispielsweise Walter AG, Gesamtkatalog 04/2004, Seiten 14, 15,

Wendeschneidplatten zum Drehen und Gewindedrehen).Vorzugsweise haben diese Schneidplatten in der Draufsicht auf die Oberseite eine dreieckige, rhombische, allgemein parallelogrammförmige oder auch rechteckige Grundform.

Auch Standard-Schneidplatten anderer Grundformen können jedoch für spezielle Gewindeformen und -profile geeignet sein oder jeweils Schneidecken aufweisen, deren Form einem Gewindeprofil entspricht. Standardschneidplatten sind dementsprechend auch für andere Verwendungszwecke geeignet und vorgesehen, individuell auswechselbar und nicht auf die Verwendung an dem oben definierten Gewindefräser der vorliegenden Erfindung beschränkt . Schneidplatten, die eine andere als in Anspruch 1 definierte Grundform aufweisen, fallen nicht unter den Schutzumfang der vorliegenden Ansprüche.

Dadurch, dass entsprechende Plattensitze in mehreren voneinander axial beabstandeten Radialebenen angeordnet sind, kann die Zahl der das Gewinde herstellenden Schneidecken entsprechend vergrößert werden, was die Effizienz des Fräsers verbessert, und die Verwendung von Standard-Schneidplatten erweist sich als sehr kostengünstig. Dabei können die Standard-Schneidplatten gegebenenfalls auch leicht modifiziert werden, beispielsweise zur Anpassung der Schneidecken an bestimmte Gewindeformen, ohne dass sich dadurch die Kosten für die Herstellung entsprechender Schneidplatten nennenswert erhöhen.

Vorzugsweise sind in einer Radialebene jeweils mindestens drei Schneidplatten auf demselben Flugkreis angeordnet, sodass jeder Gewindeabschnitt während der Rotation des Fräsers durch mindestens drei Schneidecken der drei verschiedenen Schneidplatten erzeugt wird. Weiterhin sind entsprechende Schneidplatten vorzugsweise in insgesamt mindestens drei verschiedenen Radialebenen angeordnet, was bedeutet, dass die Schneidplatten jeweils einer Radialebene jeweils unterschiedliche Abschnitte eines Gewindes herstellen können, wobei die Schneidplatten jeweils einer Radialebene im Falle von Schneidplatten in drei verschiedenen Ebenen jeweils ein Drittel eines Gewindes erzeugen und wobei der Abstand der Radialebenen dem gewünschten Vorschub bzw. auch unterschiedlichen Vorschubraten des Gewindefräsers bei der Herstellung angepasst ist, sodass die von den Schneidplatten verschiedener Radialebenen hergestellten Gewindegänge exakt in die entsprechenden Gewindegänge münden, die von Schneidplatten benachbarter Radialebenen erzeugt werden. Der axiale Vorschub des Fräsers pro Umlauf auf der spiralförmigen Bahn um die Bohrungsachse entspricht dabei grundsätzlich der jeweiligen Gewindesteigung.

In einer Ausführungsform der Erfindung sind jeweils drei Schneidplatten in fünf verschiedenen Radialebenen angeordnet, die einen axialen Abstand von etwa 12 mm zueinander haben, was es ermöglicht, verschiedene Gewinde mit Standardgewindesteigungen von 1 mm, 1,5 mm, 2 mm, 3 mm, 4 mm und 6 mm mit ein und demselben Fräser zu erzeugen.

Erfindungsgemäß sind dabei die Schneidplatten verschiedener, insbesondere benachbarter Radialebenen, in Umfangsrichtung zueinander versetzt angeordnet. Ein entsprechender Versatz der Schneidplatten benachbarter Radialebenen führt dazu, dass die Schneidplatten benachbarter Radialebenen zeitlich versetzt mit der Wand der Bohrung in Eingriff kommen, was zu einem ruhigen, vibrationsarmen Lauf des Fräsers und einer Minimierung der auf den Fräser wirkenden Abdrängkräfte führt.

Bei der bevorzugten Ausführungsform der Erfindung sind vor den Spanflächen der Schneidplatten bzw. Schneidecken Spankammern vorgesehen, die durch radial gegenüber der zylindrischen Einhüllenden des Schneidenteils zurückspringende Hohlräume gebildet werden.

Der Versatz der einander nächstliegenden Schneidplatten benachbarter Radialebenen in Umfangsrichtung entspricht zweckmäßigerweise einem Drallwinkel, der so gewählt ist, dass die Spankammern der in benachbarten Radialebenen angeordneten, einander nächstliegenden Schneidplatten in Umfangsrichtung überlappen. Dies bedeutet, dass die Spankammern von in Axialrichtung aufeinander folgenden und in Umfangsrichtung gegeneinander leicht versetzten Schneidplatten in etwa dem Verlauf einer spiralförmigen Spannut folgen, deren Drallwinkel sich aus dem axialen Abstand und dem Versatz der Schneidplatten zueinander ergibt.

Zweckmäßigerweise ist die Schneidplatte einer nachfolgenden Ebene gegenüber der nächstliegenden Schneidplatte einer vorangehenden Schneidebene in Rotationsrichtung des Fräsers zurückversetzt. Als vorangehende Radialebene wird dabei die axial weiter vorn, d. h. vom Schaft weiter entfernte Radialebene bezeichnet.

Vorzugsweise hat dieser Winkelversatz einen Betrag, der dem Umfangswinkelabstand der Schneidplatten in derselben Radialebene dividiert durch die Anzahl verschiedener Radialebenen entspricht, in welchen Schneidplatten angeordnet sind.

Dies bewirkt, dass während der Rotation des Fräsers jeweils höchstens eine einzige Schneidplatte in maximalem Eingriff mit der Bohrlochwand steht, während andere Schneidplatten sich kurz vor dem maximalen Eingriff oder kurz nach dem maximalen Eingriff mit der Bohrlochwand befinden. Dadurch erzielt man einen möglichst konstanten und vibrationsfreien Lauf des Gewindefräsers während des Betriebs.

Der Abstand der Radialebenen trägt vorzugsweise ein ganzzahliges Vielfaches einer Standardgewindesteigung. Insbesondere beträgt der Abstand der Radialebene ein gemeinsames Ganzzahliges Vielfaches einer Mehrzahl von Standardgewindesteigungen.

Vorzugsweise umfasst die Menge der Standardgewindesteigungen, für welche der Abstand der Radialebenen ein ganzzahliges Vielfaches einer Standardgewindesteigung beträgt, die Werte 1 mm, 1,5 mm, 2 mm, 3 mm, 4 mm und 6 mm pro Windung oder 1/32, 1/16, 1/8 und ¼ Zoll pro Windung umfasst.

In einer bevorzugten Ausführungsform beträgt der Abstand der Radialebenen 12 oder 24 mm, wobei aber auch Abstände der Radialebenen von 6, 15, 18, 30, 36, 42 oder 48 mm (alternativ auch 4 Zoll, 3 Zoll, 2 Zoll, 1½ Zoll 1 Zoll, ¾ Zoll, ½ Zoll oder ¼ Zoll) dafür geeignet sind, jeweils eine Mehrzahl von Standardgewindesteigungen mit einem entsprechenden Fräser herzustellen so dass auch diese Abstandswerte bevorzugte Ausführungsformen der vorliegenden Erfindung darstellen.

Als bevorzugte Standard-Schneidplatten sind insbesondere Schneidplatten bevorzugt, die je eine zumindest annähernd zueinander parallele Ober- und Unterseite sowie eine umlaufende Randfläche zwischen Ober- und Unterseite aufweisen. Erfindungsgemäß haben die Schneidplatten in der Draufsicht auf die Spanfläche die Grundform eines gleichseitigen Dreiecks und sind in ihrem jeweiligen Sitz radial montiert , d.h. dass die die Schneidecke bildenden Schneidkanten annähernd in einer die Achse enthaltenden Ebene liegen, wobei allerdings die von den Schneidkanten der Schneidecke aufgespannte Ebene gegenüber einer solchen die Achse enthaltenden Ebene auch leicht verkippt sein kann, beispielsweise um einen Winkel von bis zu ±20° und wobei insbesondere für doppelseitige Wendeschneidplatten eine leichte Verkippung der Ebene der Schneidkante gegenüber einer die Achse enthaltenden Ebene zwingend notwendig ist, um einen entsprechenden Freiwinkel zu gewährleisten.

Entsprechende dreieckige Schneidplatten haben den Vorteil, dass sie insgesamt drei nutzbare Schneidecken aufweisen und nach dem Verschleiß einer der Ecken um 120° gedreht und erneut in ihrem Sitz montiert werden können. Wie bereits erwähnt, können die Spitzen dieser Schneidecken gerundet oder gefast, bzw. gekappt sein, sodass die Ecken der Profilform eines üblichen Gewindeganges entsprechen.

Dabei sollen aber auch leichte Modifikationen entsprechender Schneidplatten von dem Schutzumfang der Erfindung umfasst sein, die in einfacher Weise durch Modifikation der in der Grundform dreieckigen Schneidplatten hergestellt werden können. Dies umfasst insbesondere Schneidplatten, bei welchen die Seitenflächen in Richtung des Zentrums leicht eingezogen oder aufgeweitet sind, was zu einer entsprechenden Variation des Flankenwinkels der Schneidecken führt, sodass die beiden die Schneidecke flankierenden Schneidkanten einen Winkel von etwas weniger als 60° oder von etwa mehr als 60° einschließen und Flankenwinkel beispielsweise zwischen 45° und 90° abgedeckt werden können.

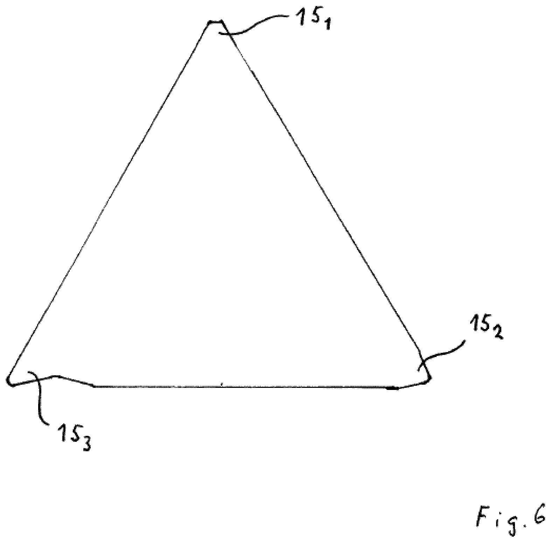

Es ist weiterhin möglich, eine Flanke einer Schneidecke über eine Stufe einseitig oder beidseitig etwas nach innen zu versetzen, um beispielsweise den radial nach innen am weitesten vorstehenden Steg der Gewindegänge des entstehenden Innengewindes zu glätten bzw. auf einen exakt definierten Radius zu fräsen. Beispiele entsprechender Variationen der Schneidecken sind in Figur 6 wiedergegeben.

Zur Herstellung eines mehrgängigen, zum Beispiel eines zweigängigen Gewindes könnte der erfindungsgemäße Fräser in einer Ausführungsform auch bereits während des Eintauchens in die Bohrung auf einer Spiralbahn bewegt werden, sodass die axial am weitesten vorn liegenden Schneidzähne sofort mit der Bohrungswand in Eingriff treten und einen entsprechenden Gewindegang herstellen. Der axiale Abstand der Radialebene eines weiteren Satzes von Schneidplatten wird dabei so gewählt, dass bei gegebener Gewindesteigung der weitere Satz von Schneidplatten einen Gewindegang zwischen den bereits erzeugten Gewindegängen schneidet. Umgekehrt könnte man auch sagen, dass bei gegebenem Abstand der Radialebenen mit Schneidplatten, die Gewindesteigung so gewählt wird, dass parallele Gewindegänge erzeugt werden. Bei einem solchen Fräser muss der Abstand der Radialebenen, welche verschiedene (parallele) Gewindegänge erzeugen, einem ganzzahligen, insbesondere ungeradzahligen Vielfachen eines Bruchteils 1/n der Gewindesteigung entsprechen, wobei n die Zahl der verschiedenen parallelen Gewindegänge ist, während der axiale Vorschub des Fräsers pro spiralförmigem Umlauf grundsätzlich immer der jeweiligen Gewindesteigung entspricht. Eine solche Variante kann zum Beispiel bei Durchgangsbohrungen sinnvoll sein, wenn der Leerlauf jeweils mindestens eines Satzes von Schneiden zu Beginn und gegen Ende des Fräsvorganges weniger ins Gewicht fällt und alle Radialebenen über die volle Gewindelänge hinweg bewegt werden können, wobei ein möglichst kurzer axialer Abstand zwischen den Radialebenen von Vorteil ist. Ein Fräser mit mindestens 2 Radialebenen in jeweils 6 mm Axialabstand könnte so ein 2-gängiges Gewinde mit 4 mm Gewindesteigung erzeugen.

In einer Ausführungsform sind die Schneidplatten doppelseitige Wendeschneidplatten, was insgesamt sechs nacheinander nutzbare Schneidecken ergibt. Die Schneidplatten weisen vorzugsweise eine zentrale Befestigungsbohrung auf und die Seitenflächen der Schneidplatten dienen vorzugsweise als Anlageflächen, so dass beim Befestigen der Schneidplatten in ihrem Sitz mit Hilfe von die Bohrung durchgreifenden Befestigungsschrauben die Position der jeweils aktiven Schneidecke exakt definiert ist durch die Anlage der Anlageflächen an den entsprechenden Sitzflächen. Dabei können bei Anlage der Anlageflächen an den entsprechenden Sitzflächen des Plattensitzes die Achsen der Bohrung der Wendeschneidplatte und der Gewindebohrung, in welche eine entsprechende Befestigungsschraube eingreift, leicht gegeneinander versetzt sein, damit bei Anziehen der Befestigungsschraube die Anlageflächen fest gegen die entsprechenden Sitzflächen gedrückt werden. Der Plattensitz kann selbstverständlich auch entsprechende Freistiche zur Aufnahme nicht aktiver Schneidkanten bzw. Schneidecken aufweisen. Weiterhin weisen die Schneidplatten vorzugsweise auf der der Spanfläche gegenüberliegenden Seite bzw. auf beiden Seiten entsprechende ebene Anlageflächen zur Anlage an einer entsprechenden ebenen Sitzfläche des Plattensitzes auf, welche auch die Befestigungsbohrung zur Befestigung der Schneidplatte aufweist. Bei der Verwendung doppelseitiger Wendeplatten muss allerdings die Ebene der Schneidecken, genauer gesagt der die Schneidecken definierenden Schneidkanten, gegenüber einer durch die Schneidspitze verlaufenden, die Rotationsachse enthaltenden Ebene geneigt sein, um einen notwendigen Freiwinkel der Schneidecken zu gewährleisten. Als Schneidspitze wird hier der radial am weitesten außenliegende Punkt (Apex) der Schneidecke bezeichnet.

In einer bevorzugten Ausführungsform der Erfindung erstreckt sich die Stützfläche des Plattensitzes, welche die der Spanfläche gegenüberliegende Anlagefläche der Schneidplatte aufnimmt, radial nach außen über die zylindrische Einhüllende des Schneidenteils hinaus, welche durch die zylindrische Grundform des Schneidenteils ohne den sich darüber hinaus erstreckenden Stützflächeabschnitt definiert wird. Ein solcher, sich radial über die zylindrische Einhüllende des Schneidenteils hinaus erstreckender Teil der Stützfläche kann insbesondere durch die Stirnseite einen am Umfang des Schneidenteils in einer Radialebene umlaufenden Steg, beispielsweise mit dreieckigem Querschnitt, bereitgestellt werden, wobei der umlaufende Steg jeweils in Bereich eines Plattensitzes und der in Rotationsrichtung davor ausgebildeten Spankammer unterbrochen ist. Der Querschnitt des Steges sollte dabei gegenüber dem Profil der davor angeordneten Schneidecke etwas zurückspringen, damit die Flanken des Steges, die im Gewindefräsbetrieb hinter einer Schneidecke durch den erzeugten Gewindegang hindurchbewegt werden, nicht mit den Gewindeflanken in Berührung kommen.

Des Weiteren ist eine Ausführungsform der Erfindung bevorzugt, bei welcher die Sitze der Wendeschneidplatten in der am weitesten vorn liegenden Radialebene so ausgestaltet sind, dass der Flugkreis der aktiven Schneidspitzen bzw. Schneidzähne der Wendeschneidplatte etwas größer ist als der Flugkreis der in Axialrichtung nachfolgenden Schneidzähne. Dieser radiale Überstand liegt typischerweise in dem Bereich von 1 bis 100 µ und hängt insbesondere von der axialen Länge des Schneidenteils und dessen Durchmesser und somit von der Biegesteifigkeit und Stabilität des Fräsers und auch der entsprechenden Einspannung ab. Dies dient der Kompensation einer radialen Abdrängung des Fräsers im Betrieb.

Gegebenenfalls können auch die Schneidzähne der auf die vordere Radialebene folgenden zweiten und dritten Radialebenen noch einen (etwas geringeren) radialen Überstand gegenüber den Schneidzähnen der jeweils nachfolgenden Ebenen haben, wenn es auf eine besondere Präzision des gesamten Gewindes ankommt.

Die axial am weitesten vorn liegenden Schneidplatten weisen vorzugsweis auch zur Achse des Fräsers geneigte Schneidkanten auf, die sich gegenüber den das Gewindeprofil erzeugenden Schneidecken radial weiter nach innen erstrecken, wobei diese vordere Schneidkante axial freiliegt, d. h. gegenüber dem Fräsergrundkörper axial hervorsteht und unter anderem zum Anfasen von Kanten, insbesondere am Rand der Öffnung einer Gewindebohrung, verwendet werden können. Das Anfasen kann wahlweise vor oder nach dem Fräsen des Gewindes erfolgen, wobei ersteres bevorzugt ist.

Weitere Vorteile, Merkmale und Anwendungsmöglichkeiten der vorliegenden Erfindung ergeben sich aus der Beschreibung bevorzugter Ausführungsformen unter Bezug auf die nachstehenden Figuren. Es zeigen:
- Figur 1: einen erfindungsgemäßen Gewindefräser in einer Seitenansicht,
- Figur 2: das Schneidenteil des Fräsers nach Figur 1 ohne Schneidplatten in einer vergrößerten Darstellung,
- Figur 3: eine Stirnansicht auf das Schneidenteil nach Figur 2 von unten,
- Figur 4: eine die Achse des Fräsers enthaltende Schnittansicht und
- Figur 5: eine zur Achse senkrechte Schnittansicht entlang einer die Schneidspitze enthaltenden Radialebene.
- Figur 6: Verschiedene Varianten von Schneidecken.

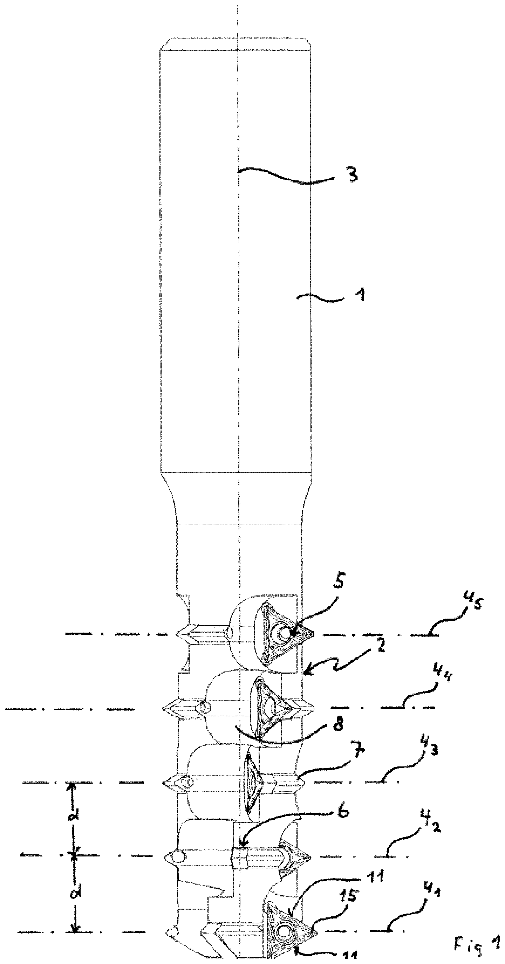

Man erkennt in Figur 1 den Grundkörper eines Fräsers, der aus einem im Wesentlichen zylindrischen Schaft 1 und einem ebenfalls im Wesentlichen zylindrischen Schneidenteil 2 besteht, die in einem Stück zusammenhängen und eine gemeinsame Rotationsachse 3 aufweisen, die auch die Symmetrieachse des Schaftes 1 und der zylindrischen Einhüllenden des Schneidenteils 2 ist, wobei die zylindrische Einhüllende des Schneidenteils 2 nur durch die zylindrischen Abschnitte außerhalb von Schneidplattensitzen und Spankammern und ohne die umlaufenden Stege 7 definiert ist, die der Stützung der Schneidspitze einzelner Schneidplatten 5 dienen.

Die Schneidplatten 5 sind Standardschneidplatten in der Grundform eines gleichseitigen Dreiecks mit einer entsprechend dreieckigen Oberseite und einer dazu im Wesentlichen parallelen Unterseite, die durch umlaufende Randflächen miteinander verbunden sind, wobei am Übergang zwischen den Randflächen und der Oberseite (bei doppelseitigen Wendeplatten auch der Unterseite) jeweils Schneidkanten gebildet werden und die Schneidkanten in der Draufsicht auf die Ober- bzw. Unterseite an Schneidecken 15 zusammentreffen, wobei die Schneidecken 15 durch die Endabschnitte der an den Ecken eines Dreiecks zusammentreffenden Schneidkanten der Schneidplatte und einen abgerundeten Übergang dazwischen gebildet werden. Die Flanken der Schneidecken schließen einen für Gewindeflanken üblichen Winkel von 60° miteinander ein.

Selbstverständlich sind Abweichungen von diesem 60°-Winkel möglich, indem die Oberseite und Unterseite eine von der Form eines gleichseitigen Dreiecks abweichende Form erhalten, beispielsweise durch Einengung oder Aufweitung der Randflächen in Richtung des Zentrums der Schneidplatte bzw. von dieser weg. Im Zentrum der Schneidplatten befindet sich jeweils eine zentrale Befestigungsbohrung.

Soweit es die Beschreibung verschiedener Schneidplatten 5 und Radialebenen 4 erleichtert, sind die Bezugszahlen 5 bzw. 4 mit zusätzlichen Zahlenindizes versehen.

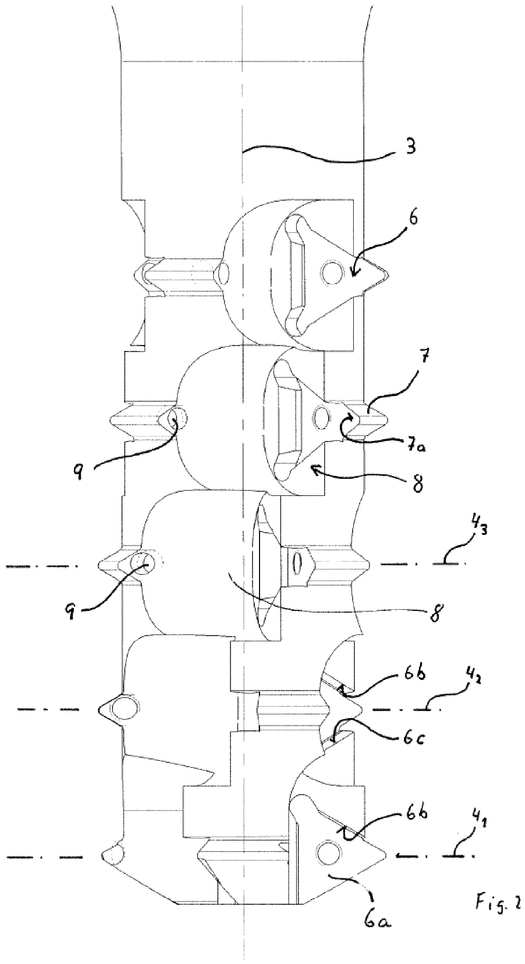

Figur 2 zeigt das Schneidenteil 2 ohne Schneidplatten, sodass die Sitze 6 der Schneidplatten besser erkennbar sind, die jeweils durch eine Grundfläche 6a und durch seitliche Anlageflächen 6b und 6c definiert werden, wobei im Falle der am weitesten vorn am Schneidenteil 2 angeordneten Plattensitze die seitlichen Anlageflächen 6c entfallen sind, sodass Schneidplatten 5₁, die in der vorderen Reihe von Plattensitzen 6 angeordnet sind, mit ihrer gesamten vorderen Schneidkante 11 zwischen zwei Schneidecken freiliegen, sodass diese Schneidkanten unter anderem zum Anfasen von Kanten, insbesondere am Rand der Öffnung einer Gewindebohrung, verwendet werden können. Das Anfasen kann wahlweise vor oder nach dem Fräsen des Gewindes erfolgen, wobei ersteres bevorzugt ist.

Der Raum vor dem jeweiligen Plattensitz 6 ist als Spankammer 8 ausgebildet und bildet jeweils eine Aussparung in dem zylindrischen Grundkörper des Schneidenteils 2. Im Bereich zwischen Plattensitzen und Spankammern sind auf der Außenseite des Schneidenteils umlaufende Stege 7 vorgesehen, deren Profil in etwa dem Profil der Schneidecken entspricht und die in derselben Radialebene angeordnet sind wie die Schneidecken 15. Im Bereich der Plattensitze 6 bilden die jeweiligen Stirnseiten der Stege 7 eine Anlagefläche 7a, die in derselben Ebene wie die Grundfläche 6a des Plattensitzes 6 liegt und somit einen Teil der Sitzfläche 6a bildet.

Auf der jeweils den Spankammern 8 zugewandten Rückseite der Stege 7 münden optional Bohrungen 9 für den Austritt eines Spül- und/oder Kühlmittels, das in Richtung der Schneidspitzen 15 in die vor den Schneidspitzen 15 liegende Spankammer 8 eingespritzt wird.

Die Stege sorgen für eine effektive Unterstützung der Schneidspitzen 15, wobei das Profil der Stege 7 gegenüber dem Profil der Schneidspitze geringfügig zurücktreten sollte.

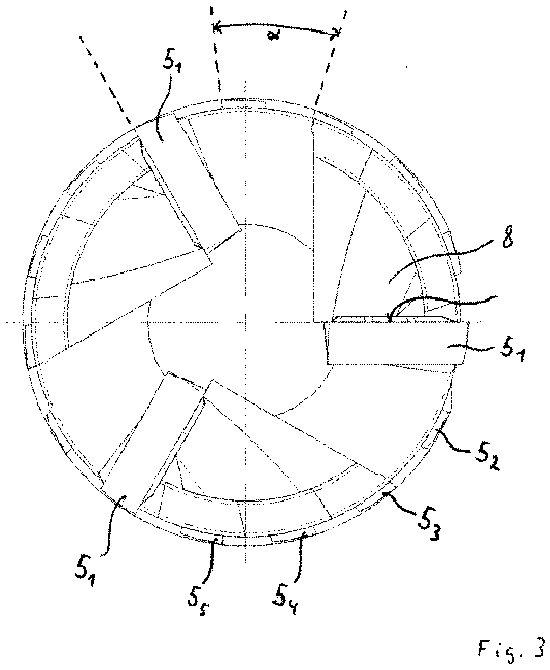

In der stirnseitigen Ansicht der Figur 3 erkennt man drei Schneidplatten in der am weitesten vorn liegenden Radialebene 4₁, deren Bezugszahlen zur Unterscheidung der Schneidplatten in nachfolgenden Ebenen mit dem Index 1 versehen sind. Die Schneidplatten der nachfolgenden Ebenen 4₂... 4₅ sind entsprechend mit 5₂... 5₅ bezeichnet.

Wie man in Figur 3 und auch in Figur 2 erkennt, sind die Schneidplattensitze 6 ebenso wie die Schneidplatten 5 einer der jeweils vorangehenden Ebene unmittelbar nachfolgenden Ebene umeinen Winkel a, der im vorliegenden Fall 24° beträgt, entgegen der Rotationsrichtung zurückversetzt. Die Rotationsrichtung ergibt sich dabei aus der Anordnung der Schneidplatten und der in Rotationsrichtung davor angeordneten Spankammern 8.

Es versteht sich, dass der Winkelversatz zwischen Schneidplatten benachbarter Ebenen auch beliebige andere Werte annehmen kann, wobei es zweckmäßig ist, die Schneidplatten insgesamt so anzuordnen, dass zu jedem Zeitpunkt während einer Drehung des Fräsers in einem Bohrloch möglichst immer die zumindest annähernd gleiche Anzahl von Schneidplatten gleichzeitig mit der Bohrlochwand in Eingriff steht und einen entsprechenden Abschnitt eines Gewindeganges herausfräst. Da im vorliegenden Fall die Schneidplatten auf 5 verschiedene Radialebenen 4 verteilt sind, beträgt der Versatz zwischen benachbarten Radialebenen 4 ein Fünftel des Umfangsabstandes (120°) zwischen Schneidplatten derselben Radialebene 4, so dass die Schneidplatten 5 insgesamt gleichmäßig entlang des Umfangs verteilt sind.

Dies gewährleistet einen relativ vibrationsfreien, ruhigen Lauf des Fräsers im Betrieb.

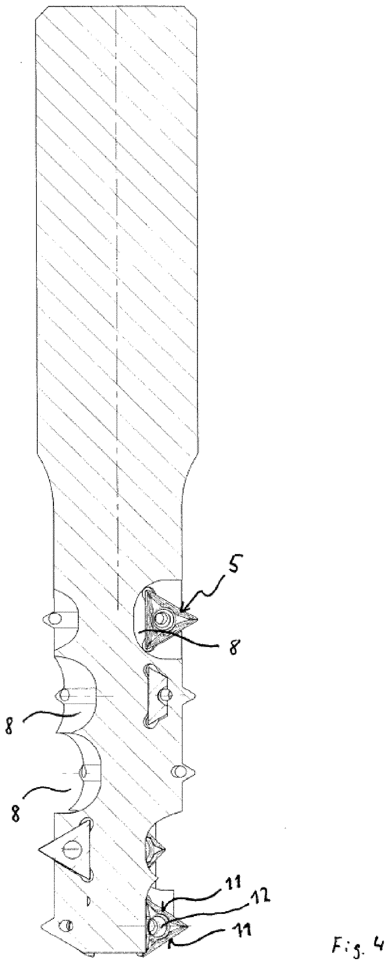

Figur 4 ist eine die Rotationsachse 3 enthaltende Schnittansicht des bereits in den Figuren 1 bis 3 dargestellten Fräsers, mit jeweils drei Schneidplatten in fünf verschiedenen Radialebenen und einem Versatz der Schneidplatten entlang eines gedachten Drallwinkels in der eben bereits beschriebenen Weise. Man erkennt in dieser Darstellung deutlich die jeweils vor den Schneidplatten ausgebildeten Spankammern 8, die sich in Umfangsrichtung des Schneidenteiles 2 über etwa 90° hinweg erstrecken. Analog zu den Schneidplatten 5 sind die Spankammern 8 ebenfalls entlang desselben Drallwinkels versetzt zueinander angeordnet und sie haben damit jeweils in Umfangsrichtung einander überlappende Bereiche, sodass die Folge von Spankammern 8 insgesamt eine Art durchgehende Spannut bildet, allerdings mit einem entsprechend unebenen Grund und stufenförmigen Übergängen. Dies kann insbesondere in relativ engen Bohrlöchern von Vorteil sein, in welchen der Durchmesser des Bohrloches und des zu erzeugenden Gewindes nur geringfügig größer ist als der Durchmesser des Flugkreises der Schneidspitzen, weil auf diese Weise die beim Fräsen entstehenden Späne zwischen den einzelnen Kammern auch in axialer Richtung weiter und aus dem Bohrloch heraus transportiert werden können. Dabei wäre es weiterhin möglich, die Übergänge zwischen benachbarten Spankammern noch weiter einzuebnen und zu glätten, so dass der Eindruck und auch die Wirkung einer Spannut noch verbessert wird.

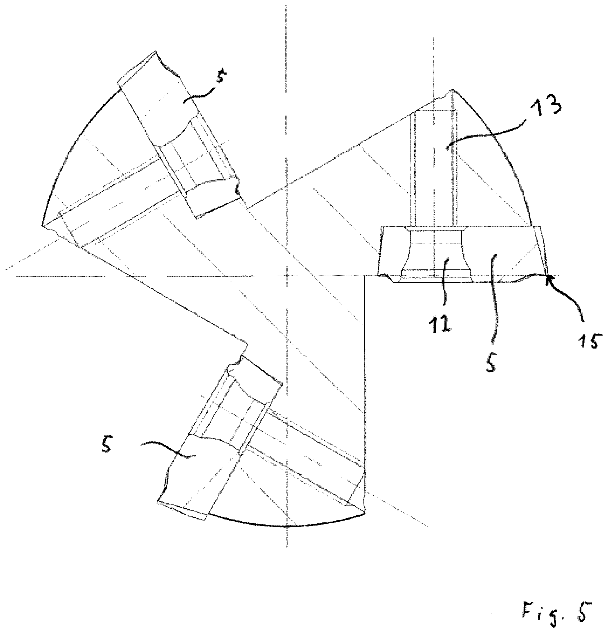

Die radiale Schnittansicht gemäß Figur 5 zeigt nochmals deutlich drei in einer Radialebene 4 angeordnete Schneidplatten 5 mit davor ausgebildeten Spankammern 8. Weiterhin sind gut erkennbar Gewindebohrungen 13 in der Sitzfläche 6a des Plattensitzes, die nicht vollständig mit den Durchgangsbohrungen 12 der Schneidplatten fluchten, sodass beim Festziehen einer entsprechenden Spannschraube, die in die Gewindebohrung 13 eingreift, die Schneidplatten 5 in fester Anlage nicht nur mit der Grundfläche 6a des Plattensitzes, sondern auch mit den seitlichen Anlageflächen 6b und 6c gebracht werden.

Die in der vorliegenden Ausführungsform verwendeten Schneidplatten sind einseitige Wendeschneidplatten mit positiver Schneidgeometrie, konkret einem Keilwinkel von weniger als 90° an der Schneidkante 11 zwischen Freifläche und Spanfläche, wobei die Spanfläche auch durch Spanmulden, Spanbrecher und dergleichen strukturiert sein kann.

Die Schneidplatten 5 und deren Sitze 6 können dann insbesondere so angeordnet sein, dass die Schneidkanten 11 im Wesentlichen in einer die Rotationsachse 3 enthaltenden Ebene liegen.

Die Anzahl der Schneidplatten, die jeweils in einer Radialebene angeordnet sind, sollte mindestens zwei betragen, damit Innengewinde mit einem solchen Fräser entsprechend schnell und effizient hergestellt werden können. Die Anzahl der Schneidplatten pro Radialebene kann auch größer als drei sein, insbesondere für Fräser mit größerem Durchmesser, die auch Gewinde mit entsprechend großem Durchmesser herstellen, im Übrigen ist jedoch die Anzahl der Schneidplatten durch den notwendigen Erhalt der Stabilität des Fräsers bzw. des Schneidenteils und die Größe der zur Verfügung stehenden Standardschneidplatten begrenzt.

Da das Vorsehen von Plattensitzen und Spankammern notwendigerweise den Querschnitt des Schneidenteils reduziert und die Stabilität bzw. Biegefestigkeit des Schneidenteils begrenzt, kann in einer Ausführungsform der Erfindung vorgesehen sein, dass die Schneidspitze von axial weiter vorn liegenden Schneidplatten, gegenüber den Schneidspitzen von axial weiter hinten, d.h. näher zum Schaft, liegenden Schneidplatten jeweils um einige Mikrometer größer ist als in der zum Schaft hin nächstfolgenden Radialebene.

Dies trägt dem Umstand Rechnung, dass bei einem Gewindefräsvorgang die am weitesten vorn liegenden Abschnitte des Fräsers bzw. deren Schneidspitzen geringfügig radial nach innen abgedrängt werden.

Der Abstand d zwischen benachbarten Radialebenen 4₁, 4₂... 4₅ beträgt in der vorliegenden Ausführungsform 12 mm und ist damit ein gemeinsames ganzzahliges Vielfaches von 1; 1,5; 2; 3; 4 und 6. Dies ermöglicht es, mit einem solchen Gewindefräser, wie er in Figur 1 dargestellt ist, unterschiedliche Gewinde mit den Gewindesteigungen 1; 1,5; 2; 3; 4 und 6 herzustellen, wobei die drei Schneidplatten jeder Radialebene jeweils einen Gewindeabschnitt von 12 mm axialer Länge herstellen und wobei bei entsprechendem Vorschub die von den Schneidplatten 5₁, 5₂... 5₅ hergestellten Gewindegänge passgenau ineinanderlaufen. Die gesamte Gewindelänge beträgt dann 60 mm. Gewinde mit Zollmaßen sind völlig analog herzustellen, wobei im Falle von eingängigen Gewinden die Abstände der Radialebenen zur Erzeugung von Gewinden mit Zollmaßen jeweils einem ganzzahligen Vielfachen der in Zoll ausgedrückten Gewindesteigung entsprechen. Auch hier sind wiederum Abstände der Radialebenen bevorzugt, die ein gemeinsames ganzzahliges Vielfaches mehrerer Standard-Gewindesteigungen (mit Zollmaßen) sind.

Selbstverständlich kann auch die Zahl der in axialer Richtung aufeinanderfolgenden Radialebenen mit Schneidplatten variiert werden, sollte aber ebenso wie die Anzahl der Schneidplatten in einer Radialebene mindestens zwei betragen, wobei die Effizienz eines entsprechenden Gewindefräsers, d.h. die Zahl der pro Zeiteinheit damit hergestellten Gewinde einer vorgegebenen Länge mit der Anzahl der Schneidplatten pro Radialebene und der Anzahl der Radialebenen, in welchen Schneidplatten vorgesehen sind, steigt.

Im Betrieb wird beispielsweise der Fräser nach Figur 1 zunächst soweit in eine entsprechend vorbereitete Bohrung eingetaucht, dass die die Schneidspitzen der Schneidplatten der am weitesten axial zurückversetzten Radialebene 4₅ in etwa im Bereich der Öffnung der Bohrung liegen während der Abschnitt des Schneidenteil mit den übrigen Schneidplatten der Radialebenen 4₁ bis 4₄ in die Bohrung eingetaucht ist. Dann (oder auch schon vor oder während des Eintauchens) wird der Fräser in Rotation versetzt und anschließend radial nach außen verschoben, bis die Schneidzähne mit der Wand der Bohrung in Eingriff treten und beginnen, jeweils einen Abschnitt eines Gewindeganges erzeugen, woraufhin der gesamte Fräser spiralförmig um die Achse der Bohrung herum und dabei gleichzeitig axial entsprechend einer gewünschten Gewindesteigung vorwärts bewegt wird, bis die Schneidzähne einer axial nachfolgenden Radialebene die von den Zähnen der axial davor liegenden Radialebene erzeugten Gewindegänge passgenau erreichen, woraufhin der Fräser wieder bezüglich der Achse der Gewindebohrung zentriert und axial zurückgezogen wird. Auf diese Weise wird ein Gewinde mit einer Tiefe erzeugt, die bei eingängigen Gewinden dem n-fachen des Abstandes zwischen den Radialebenen entspricht, wobei n die Anzahl der verschiedenen Radialebenen mit Schneidplatten ist.

Der in den vorliegenden Figuren dargestellte Gewindefräser hat gegenüber den eingangs diskutierten Gewindefräsern eine erheblich gesteigerte Effektivität, ist gleichzeitig sehr vielseitig verwendbar, kann noch mit relativ geringen Flugkreisdurchmessern der Schneidspitzen von zum Beispiel 30 mm hergestellt werden und ist dabei durch die Verwendung von Standard-Schneidplatten relativ kostengünstig im Betrieb. Für die Herstellung von Innengewinden mit deutlich kleineren Durchmessern als 30 mm, ist zunächst die Anzahl der Schneidplatten pro Radialebene zu reduzieren, während die Zahl der in axialer Richtung in verschiedenen Radialebenen angeordneten Schneidplatten letztlich nur durch die herzustellenden Gewindelängen begrenzt ist.

Figur 6 zeigt verschiedene Formen von denkbaren Schneidecken, die hier an einer einzigen Schneidplatte 5' dargestellt sind, wobei es sich versteht, dass man in aller Regel Schneidplatten einheitlich mit jeweils denselben Schneidecken versehen wird, da auch die Schneidsitze auf die Form der Schneidecken abgestimmt sein müssen, um ein bestimmtes, gewünschtes Gewinde zu erzeugen.

Die Schneidecke 15₁ hat ein im Wesentlichen trapezförmiges Profil, wobei selbstverständlich die Übergänge zwischen den zueinander abgewinkelten Schneidkantenabschnitten wiederum einen kleineren Radius aufweisen können. Bei der Schneidecke 15₂ sind die Endabschnitte der Schneidkanten 11 derart abgewinkelt, dass sie einen größeren Winkel als 60° einschließen, sodass man mit einer solchen Schneidecke Gewinde herstellen kann, deren Flankenwinkel größer als 60° ist. Bei der Schneidecke 15₃ ist die Schneidkante 11 hinter dem Endabschnitt etwas nach innen versetzt, sodass zwischen den Endabschnitten der Schneidkanten 11 ein kleinerer Winkel als 60° eingeschlossen wird, sodass mit einer solchen Schneidecke Gewinde mit Flankenwinkeln von weniger als 60° hergestellt werden können. Gegebenenfalls könnten die Endabschnitte der Schneidkanten 11 auch nahezu parallel verlaufen, um beispielsweise Gewinde für einen Spindeltrieb herzustellen.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Gewindefräser mit einem Grundkörper, der aus einem Schaft (1) und einem in der Grundform zylindrischen Schneidenteil (2) besteht, und mit einer Rotationsachse (3) und mehreren in Umfangsrichtung beabstandeten Schneidzähnen, die in mindestens zwei verschiedenen und sich senkrecht zur Rotationsachse (3) erstreckenden Radialebenen (4) an dem Schneidenteil (2) angeordnet sind, wobei das Schneidenteil (2) jeweils mindestens 2 Sitze (6) zur Aufnahme je einer Schneidplatte (5) in jeder von mindestens zwei verschiedenen Radialebenen aufweist und die Schneidzähne durch Schneidecken (15) von Schneidplatten (5) gebildet werden, **dadurch gekennzeichnet, dass** die Schneidplatten (5) in der Draufsicht auf die Spanfläche die Grundform eines gleichseitigen Dreiecks haben, und radial in ihrem Sitz montiert sind, und dass die Schneidplatten verschiedener Radialebenen in Umfangsrichtung zueinander versetzt angeordnet sind.

2. Gewindefräser nach Anspruch 1, **dadurch gekennzeichnet, dass** in einer Radialebene (4) jeweils mindestens drei Schneidplatten (5) auf demselben Flugkreis angeordnet sind.

3. Gewindefräser nach einem der vorstehenden Ansprüche, **dadurch gekennzeichnet, dass** die Schneidplatten in insgesamt mindestens drei verschiedenen Radialebenen (4) angeordnet sind.

4. Gewindefräser nach einem der vorstehenden Ansprüche, **dadurch gekennzeichnet, dass** vor den Spanflächen der Schneidplatten Spankammern (8) vorgesehen sind, die durch radial gegenüber der zylindrischen Einhüllenden des Schneidenteils (2) zurückspringende Hohlräume gebildet werden, wobei der Versatz der einander nächstliegenden Schneidplatten benachbarter Radialebenen in Umfangsrichtung einem Drallwinkel entspricht, der so gewählt ist, dass die Spankammern der in benachbarten Radialebenen angeordneten, einander nächstliegenden Schneidplatten in Umfangsrichtung überlappen.

5. Gewindefräser nach einem der vorstehenden Ansprüche, **dadurch gekennzeichnet, dass** der Abstand der Radialebenen (4) ein ganzzahliges Vielfaches einer oder mehrerer Standard-Gewindesteigungen beträgt.

6. Gewindefräser nach einem der vorstehenden Ansprüche, **dadurch gekennzeichnet, dass** die Spitzen der Schneidecken (15) gerundet oder gekappt sind.

7. Gewindefräser nach einem der vorstehenden Ansprüche, **dadurch gekennzeichnet, dass** die axial am weitesten vorn liegenden Schneidkanten (11) der Schneidplatten (5) mit dreieckiger Grundform in dem Bereich radial innerhalb der profilbildenden Schneidecke (15) gegenüber dem Grundkörper des Schneidenteils (2) axial hervorsteht.

8. Gewindefräser nach einem der vorstehenden Ansprüche, **dadurch gekennzeichnet, dass** die Seitenflächen der Schneidplatten zwischen benachbarten Schneidecken in Richtung des Zentrums der Schneidplatte eingezogen oder von Zentrum aus aufgeweitet sind.

9. Gewindefräser nach einem der vorstehenden Ansprüche, **dadurch gekennzeichnet, dass** die Schneidplatten (5) doppelseitige Wendeschneidplatten sind.

10. Gewindefräser nach einem der vorstehenden Ansprüche, **dadurch gekennzeichnet, dass** die Schneidecken in der Draufsicht auf die Spanfläche insgesamt die vollständige Profilform mindestens eines Gewindesteges und gegebenenfalls auch eines Gewindegrundes aufweisen.

11. Gewindefräser nach einem der vorstehenden Ansprüche, **dadurch gekennzeichnet, dass** der Plattensitz eine Sitzfläche (6a) für die der Spanfläche gegenüberliegende Anlagefläche der Schneidplatte (5) aufweist, wobei die Sitzfläche (6a) einen sich radial nach außen über die zylindrische Einhüllende des Schneidenteils (2) hinaus erstreckenden Sitzflächenabschnitt (7a) aufweist.

12. Gewindefräser nach Anspruch 11, **dadurch gekennzeichnet, dass** der Sitzflächenabschnitt (7a) durch die Stirnseite eines in der Radialebene umlaufenden und nur im Bereich der Plattensitze und der Spankammern (8) unterbrochenen Steges (7) gebildet wird

13. Gewindefräser nach einem der vorstehenden Ansprüche, **dadurch gekennzeichnet, dass** die Schneidzähne einer vom dem Schaft weiter entfernten, und mindestens der am weitesten vom Schaft entfernten, vorderen Radialebene gegenüber den Schneidzähnen aller in Richtung Schaft nachfolgenden Radialebenen zum Ausgleich einer radialen Abdrängung einen geringen radialen Überstand in der Größenordnung von 1 bis 100 µm gegenüber Schneidzähnen der nachfolgenden Radialebenen haben.

## Claims

1. A thread milling cutter comprising a main body having a shank (1) and a cutting portion (2) having a cylindrical basic shape and an axis of rotation (3), and a plurality of cutting teeth spaced in a peripheral direction and arranged on the cutting portion (2) in at least two different radial planes (4), which radial planes extend perpendicularly to the axis of rotation (3), wherein the cutting portion has at least two seats (6) for receiving a respective cutting insert (5) in each of the at least two different radial planes, and wherein the cutting teeth are formed by cutting corners (15) of the cutting inserts (5), **characterized in that** the cutting inserts (5) in a plan view of the rake face have a basic shape of an equilateral triangle and are mounted radially in their respective seat, and **in that** the cutting inserts of different radial planes are arranged in a mutually displaced relationship in the peripheral direction.

2. The thread milling cutter according to claim 1, **characterized in that** at least three cutting inserts (5) are respectively arranged on a same rotational circle in a radial plane (4).

3. The thread milling cutter according to one of the preceding claims, **characterized in that** the cutting inserts are arranged in overall at least three different radial planes (4).

4. The thread milling cutter according to one of the preceding claims, **characterized in that** in front of the rake faces of the cutting inserts chip spaces (8) are provided, which chip spaces are formed by cavities, which cavities are set back radially with respect to a cylindrical envelope of the cutting portion (2), wherein the displacement of mutually closest cutting inserts of adjacent radial planes in the radial direction correspond to a twist angle, which twist-angle is so selected that the chip spaces of the mutually closest cutting inserts arranged in adjacent radial planes overlap in the peripheral direction.

5. The thread milling cutter according to one of the preceding claims, **characterized in that** the spacing of the radial planes (4) is an integral multiple of one or more standard thread pitches.

6. The thread milling cutter according to one of the preceding claims, **characterized in that** the tips of the cutting corners (15) are rounded or trimmed back.

7. The thread milling cutter according to one of the preceding claims, **characterized in that** the axially most forwardly disposed cutting edges (11) of the cutting inserts (5) having a triangular basic shape axially project in a region radially within a profile-forming cutting corner (15) with respect to the main body of the cutting portion (2).

8. The thread milling cutter according to one of the preceding claims, **characterized in that** the side faces of the cutting inserts are drawn inwardly between adjacent cutting corners in the direction of a center of the cutting insert and/or are expanded outwardly from the center.

9. The thread milling cutter according to one of the preceding claims, **characterized in that** the cutting inserts (5) are double-sided indexable cutting inserts.

10. The thread milling cutter according to one of the preceding claims, **characterized in that** in a plan view of the rake face the cutting corners overall are a complete profile shape of at least one thread flight and where appropriate also of a thread base.

11. The thread milling cutter according to one of the preceding claims, **characterized in that** the insert seat has a seat face (6a) for a contact face of the cutting insert (5) that is opposite to the rake face, wherein the seat face (6a) has a seat face portion (7a) extending radially outwardly beyond the cylindrical envelope of the cutting portion (2).

12. The thread milling cutter according to claim 11, **characterized in that** the seat face portion (7a) is formed by an end face of a web (7), which peripherally extends in the radial plane and which is interrupted only in a region of the seats and the chip spaces (8).

13. The thread milling cutter according to one of the preceding claims, **characterized in that** the cutting teeth of a front radial plane which is further remote from the shank and at least the front radial plane which is most remote from the shank with respect to the cutting teeth of all radial planes occurring in succession in a direction of the shank have a small radial projection of 1 to 100 µm in relation to cutting teeth of next following radial planes to compensate for radial deflection.

## Revendications

1. Fraise à fileter comprenant un corps de base constitué d'un fût (1) et d'une partie coupante (2) à configuration de base cylindrique, un axe de rotation (3) et plusieurs dents de coupe qui sont espacées dans la direction périphérique et sont disposées, sur ladite partie coupante (2), dans au moins deux plans radiaux différents (4) s'étendant perpendiculairement audit axe de rotation (3), ladite partie coupante (2) étant munie, à chaque fois, d'au moins deux sièges (6) conçus pour recevoir une platine de coupe (5) respective dans chacun d'au moins deux plans radiaux différents, et lesdites dents de coupe étant formées par des coins tranchants (15) de platines de coupe (5), **caractérisée par le fait que** les platines de coupe (5) présentent la configuration de base d'un triangle équilatéral, en observant la face d'attaque par-dessus, et sont montées radialement dans leur siège ; et **par le fait que** les platines de coupe de différents plans radiaux sont agencées avec décalage mutuel dans la direction périphérique.

2. Fraise à fileter selon la revendication 1, **caractérisée par le fait qu'**au moins trois platines de coupe (5) sont disposées, à chaque fois, sur la même circonférence de révolution dans un plan radial (4).

3. Fraise à fileter selon l'une des revendications précédentes, **caractérisée par le fait que** les platines de coupe sont disposées dans différents plans radiaux (4) au nombre total de trois au minimum.

4. Fraise à fileter selon l'une des revendications précédentes, **caractérisée par** la présence, devant les faces d'attaque des platines de coupe, de chambres (8) à copeaux formées par des cavités radialement en retrait par rapport à l'enveloppante cylindrique de la partie coupante (2), sachant que le décalage des platines de coupe mutuellement les plus rapprochées dans des plans radiaux voisins correspond, dans la direction périphérique, à un angle d'hélice choisi de façon telle que les chambres à copeaux des platines de coupe mutuellement les plus rapprochées, disposées dans des plans radiaux voisins, se chevauchent dans ladite direction périphérique.

5. Fraise à fileter selon l'une des revendications précédentes, **caractérisée par le fait que** l'espacement des plans radiaux (4) représente un multiple entier d'un ou de plusieurs pas de filetage normalisé(s).

6. Fraise à fileter selon l'une des revendications précédentes, **caractérisée par le fait que** les pointes des coins tranchants (15) sont arrondies ou écrêtées.

7. Fraise à fileter selon l'une des revendications précédentes, **caractérisée par le fait que** les arêtes tranchantes (11) axialement les plus éloignées, à l'avant des platines de coupe (5) à configuration de base triangulaire, dépassent axialement, par rapport au corps de base de la partie coupante (2), dans la région située radialement à l'intérieur du coin tranchant (15) formant le profil.

8. Fraise à fileter selon l'une des revendications précédentes, **caractérisée par le fait que** les faces latérales des platines de coupe sont rétractées en direction du centre de la platine de coupe, entre des coins tranchants voisins, ou sont élargies à partir dudit centre.

9. Fraise à fileter selon l'une des revendications précédentes, **caractérisée par le fait que** les platines de coupe (5) sont des platines de coupe réversibles à double face.

10. Fraise à fileter selon l'une des revendications précédentes, **caractérisée par le fait que** les coins tranchants présentent globalement, en observant la face d'attaque par-dessus, la forme intégrale du profil d'au moins une crête de filet et également, le cas échéant, d'un fond de filet.

11. Fraise à fileter selon l'une des revendications précédentes, **caractérisée par le fait que** le siège de platine comporte une surface d'assise (6a) dévolue à la surface de contact de la platine de coupe (5) tournée à l'opposé de la face d'attaque, laquelle surface d'assise (6a) est pourvue d'un tronçon (7a) faisant saillie vers l'extérieur, dans le sens radial, au-delà de l'enveloppante cylindrique de la partie coupante (2).

12. Fraise à fileter selon la revendication 11, **caractérisée par le fait que** le tronçon (7a) de la surface d'assise est formé par la face frontale d'une membrure (7) en révolution dans le plan radial, interrompue uniquement dans la région des sièges de platines et des chambres (8) à copeaux.

13. Fraise à fileter selon l'une des revendications précédentes, **caractérisée par le fait que** les dents de coupe d'un plan davantage éloigné du fût, et au moins du plan radial antérieur le plus éloigné dudit fût, présentent par rapport aux dents de coupe de tous les plans radiaux successifs dans la direction dudit fût, en vue de compenser une excursion radiale, un léger débord radial de l'ordre de 1 à 100 µm par rapport à des dents de coupe desdits plans radiaux successifs.
